# EUROPEAN PATENT SPECIFICATION

(11) **EP 3 727 907 B1**
(45) Date of publication and mention of the grant of the patent: **19.03.2025**
(21) Application number: 18834059.0
(22) Date of filing: 20.12.2018
(51) Int. Cl.: B60G 15/06, F16F 3/02, B62K 25/00, B62K 19/32, B62K 25/08

(54) **SUSPENSION WITH A TORSIONALLY RIGID SPRING, RELATED FRONT CHASSIS, AND RELATED MOTORCYCLE**
AUFHÄNGUNG MIT ENER TORSIONSSTARREN FEDER, ENTSPRECHENDES VORDERCHASSIS UND ENTSPRECHENDES MOTORRAD
SUSPENSION AVEC UN RESSORT RIGIDE EN TORSION, CHÂSSIS AVANT ASSOCIÉ, ET MOTO ASSOCIÉE

(30) Priority: 22.12.2017 IT 201700149074
(43) Date of publication of application: 28.10.2020
(73) Proprietor: Piaggio & C. S.P.A., 56025 Pontedera Pisa (IT)
(72) Inventor: RAFFAELLI, Andrea, 56025 Pontedera, Pisa (IT)
(74) Representative: Mitola, Marco
(86) International application number: PCT/IB2018/060446
(87) International publication number: WO 2019/123379

(56) References cited:
- EP-A1- 0 238 768
- WO-A1-00/13961
- DE-U1- 20 000 794
- FR-A1- 2 940 242
- GB-A- 2 389 161
- SU-A1- 1 208 368
- SU-A1- 1 573 251
- US-A- 2 551 505
- US-A- 2 729 443
- US-A- 361 298
- US-A- 5 558 393
- US-B1- 6 336 647

## Description

### FIELD OF APPLICATION

The present invention relates to a spring for suspensions, a suspension for motor vehicles, and in particular, to a front chassis and a motor vehicle comprising a suspension.

### BACKGROUND ART

As is known, motor cycles comprise one or two front wheels, each connected to the steering by a fork or by a single arm comprising a suspension system.

The suspension system is normally arranged at the single arm or at the fork.

The suspension of a motor vehicle is the assembly of components by means of which the frame is connected to the wheel(s) of the motor vehicle.

A suspension is known from documents FR2940242 A1, which discloses the preamble of claim 1, WO00/13961 A1, DE20000794 U1, US6336647 B1, and EP0238768 A1.

Springs with annular lamellae are known from GB2389161 A, US2551505 A, US2729443 A, SU1208368 A1, SU1573251 A1, US361298 A, US5558393 A.

The suspension generally comprises two slidingly connected elements and an elastic element interposed between said elements. In order to avoid the relative rotation about the suspension axis, said elements are normally connected to each other prismatically or by means of a pair of connecting rods. The geometry of the prismatic connection or the arm created by the connecting rods prevents a rotation of the steering from being completely transmitted to the wheel(s).

A prismatic connection between the upper and lower elements of the suspension can results in jammings of the suspension and significant frictions, with a consequent suspension inefficiency.

A connection of the upper and lower elements of the suspension results in an overall increase in size of the front chassis, with a consequent increase in the manufacturing costs of the vehicle.

### DISCLOSURE OF THE INVENTION

The need is thus felt to overcome the drawbacks and limitations of the prior art.

It is an object of the present invention to provide a suspension according to claim 1.

Further objects of the present invention are represented by:
- a front chassis according to claim 6;
- a motorcycle according to claim 7.

### DESCRIPTION OF THE DRAWINGS

Further features and advantages of the present invention will become more apparent from the description reported below of preferred, non-limiting embodiments thereof, in which:
- figure 1 is an axonometric view of a first example of a torsionally rigid spring;
- figure 2a is a plan view of the spring in figure 1;
- figure 2b is a section view of the spring in figure 1;
- figure 3a is an axonometric view of a second example of a torsionally rigid spring;
- figure 3b is an axonometric view of a lamella of the spring in figure 3a;
- figure 4a is a plan view of the spring in figure 3a;
- figure 4b is a section view of the spring in figure 3a;
- figure 5 is an axonometric view of a motor vehicle comprising a suspension according to the first example of the spring;
- figure 6 depicts a detail of the front chassis of the motor vehicle in figure 5;
- figure 7 is an axonometric view of a steering-free motor vehicle comprising a suspension according to the first example of the spring;
- figure 8 depicts a detail of the front chassis of the motor vehicle in figure 7. Elements or parts of elements in common to the examples described below are shown by the same reference numerals.

### DETAILED DESCRIPTION

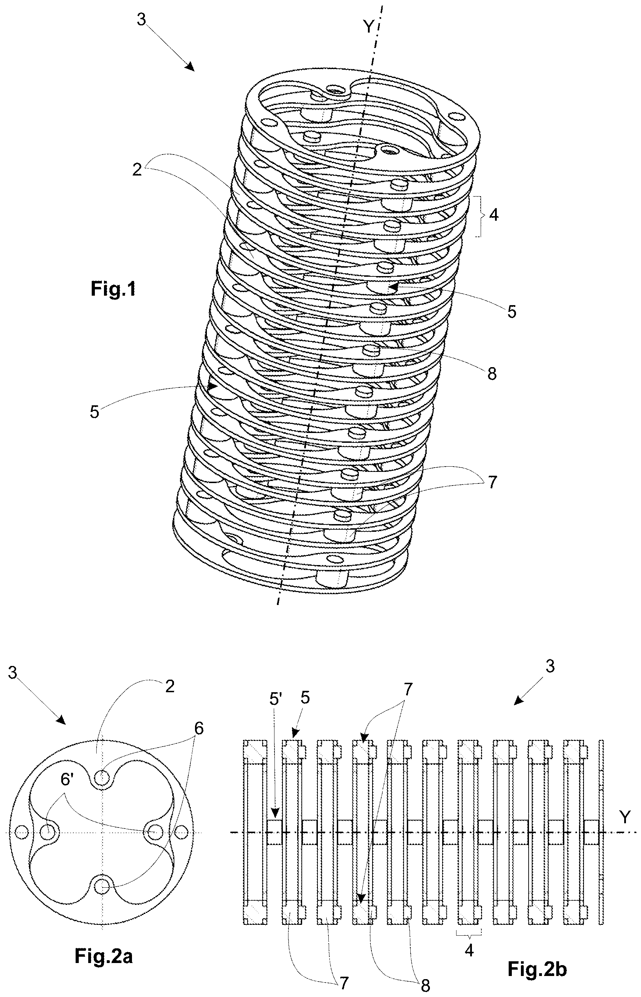

With reference to figure 1, 2a and 2b, a spring according to a first example is indicated by numeral 3.

In particular, said spring 3 comprises a plurality of annular lamellae 2 stacked on top of one another so that the center of said annular lamellae lies on a common axis Y. Each lamella 2 is connected to the neighboring lamella 2 with at least two connection elements 5. Adjacent lamellae are indicated by reference numeral 4 for greater clarity.

A lamella 2 can be connected to one or two adjacent lamellae.

The connections of a lamella 2 to the adjacent lamellae are mutually angularly staggered. In particular, each pair of connection elements is angularly staggered with respect to the adjacent pair of connection points 5', as shown in figure 2a.

The connection elements 5 of subsequent lamellae 2 are alternately rotated by 90°.

Said pair of connection elements 5 is thus angularly staggered by 90° from said adjacent pair of connection points 21.

The lamellae 2 are made of flexible material, therefore the portions of lamellae 2 not affected by said connections 5 can bend.

Said bending of the lamellae 2 allows the generation of the elastic effect which is typical of springs.

The lamellae 2 in figure 1 and 2b are connected by means of connection elements 5 and are spaced apart by spacer elements 7.

The lamellae 2 have a flattened annular shape. Said lamellae 2 are preferably equal to one another. The connection elements 5 of the lamellae 2 can comprise holes arranged diametrically opposed to one another every 90°.

Preferably, said holes can be six in number and arranged every 60° from one another. In this case (not shown), three holes arranged at 120° from one another will be used to connect the lamella to the lamella arranged downstream, while the remaining three holes will be used to connect the lamella to the lamella arranged upstream.

When the holes are four in number, two diametrically opposite holes are used to connect the lamella to the lamella downstream, while the remaining two holes are used to connect the lamella to the lamella upstream. The terms upstream and downstream refer to the longitudinal development along axis Y.

The lamella 2 shown in figure 2a comprises connection elements 5 having, in pairs, a different distance from axis Y. This arrangement of the connection holes allows a mutually simplified assembly of the lamellae 2.

The spring 3, thus formed, allows an elastic bending along the axial direction, thus avoiding a torsional rotation thereof. Spring 3 is also highly lightweight.

The lamellae 2, thus conceived, can be particularly thin and therefore easy to be obtained by means of punching or molding.

The connection part 8 can pass through the spacer element 7. The connection part 8 can also form an integral part of the spacer element 7. The connection part 8 can be obtained by means of any known mechanical connection, such as, rivets, bolts, etc.

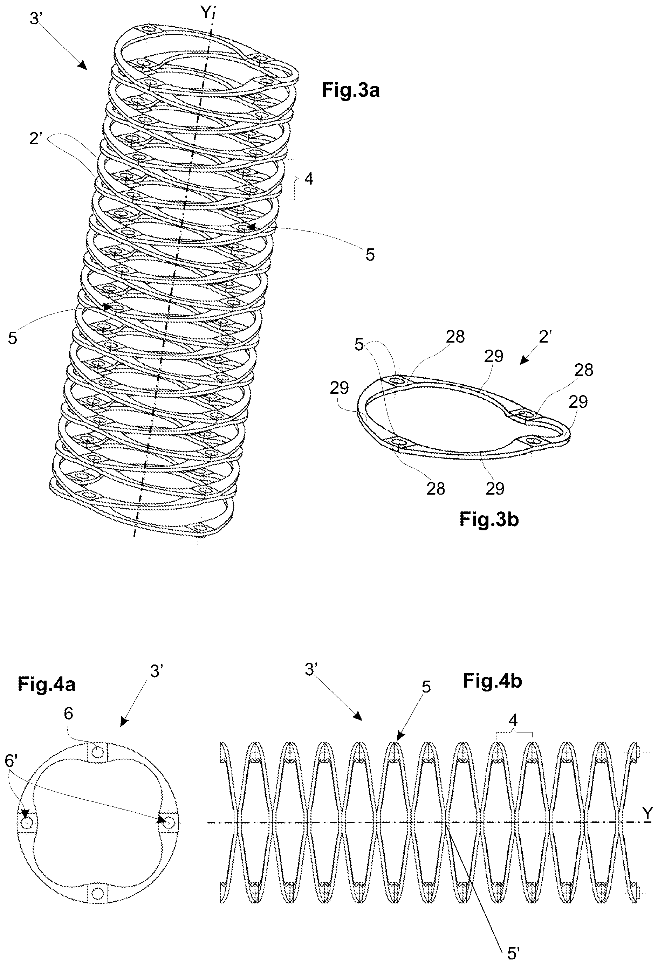

A second example of the torsionally rigid spring 3' is shown in figures 3a, 3b 4a, 4b.

In this version of spring 3', the lamellae 2' are not flat as in the first example.

As shown in figure 3a, each lamella 2' comprises substantially planar portions 28 at the connection elements 5. Said planar portions 28 lie on parallel planes which are spaced apart. Said planar portions 28 are connected by curved or inclined portions 29.

Said annular lamella 2' is flexible in order to planarly extend when subjected to compression along axis Y.

Each lamella 2' is connected to the next one with connection elements 5 by connection parts 8, such as rivets or welding.

As in the first example, each annular lamella 2' is connected on one side to the next lamella with connection elements 5, and on the opposite side, to the previous lamella with connection elements 5, which are angularly staggered with respect to the previous ones (fig. 4a, 4b).

Since the lamellae 2' are sequentially fixed, a compression of the ends of the lamella pack results in an elastic deformation of the single lamellae 2' without torsional deformation. This effect also applies to the first embodiment of the spring. The term lamella pack means the assembly consisting of all the lamellae 2, 2' connected to one another.

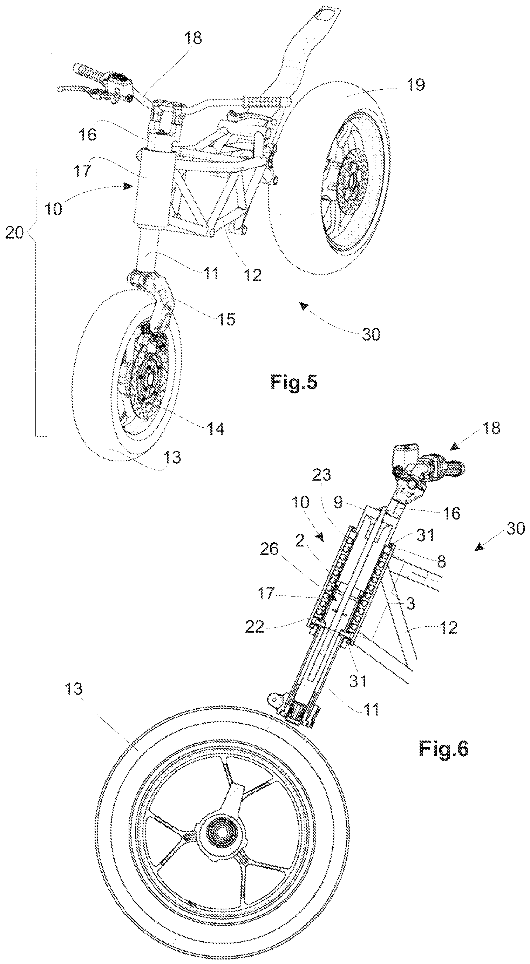

With reference to figures 5, 6, 7 and 8, a suspension 10 represents an object of the present invention, comprising two elements sliding with respect to each other, referred to as a tube or sheath 9 and a rod or shaft 11, between which a spring according to the first example is connected.

Said tube 9 and said rod 11 are configured to slide coaxially, one on top of the other, by means of a cylindrical-type coupling.

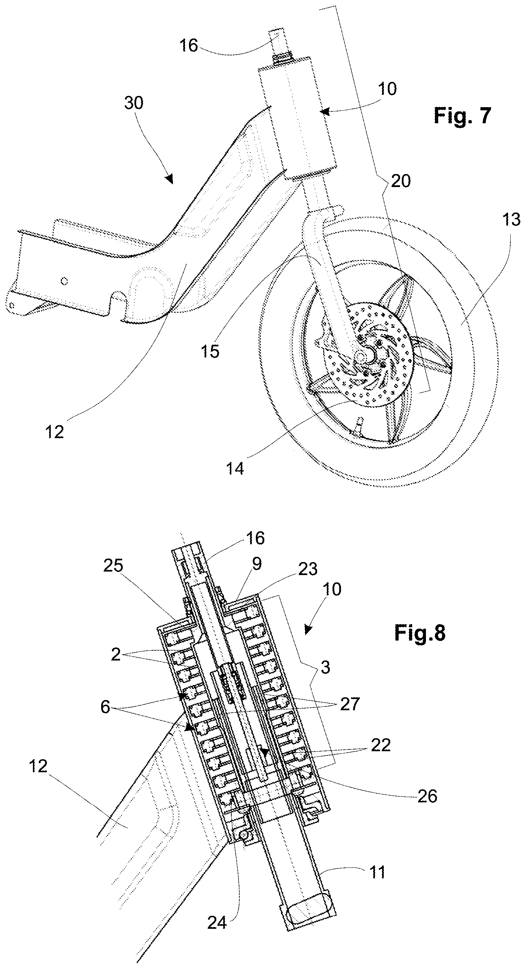

One or more bushings 27 can be interposed between tube 9 and rod 11, as seen in figure 8. Said bushings 27 facilitate the relative sliding between said elements without jammings.

Said rod 11 and said tube 9 have end-stroke or abutment elements 24, 25 to which the lamella pack is connected by means of annular end lamellae 22, 23.

The annular end lamellae 22, 23 are those lamellae positioned at the opposite ends of the lamella pack. Said annular end lamellae 22, 23 can be equal to the others or have further portions for the connection with rod 11 and tube 9, respectively.

Said annular end lamellae 22, 23 are connected to rod 11 and tube 9, respectively, in order to prevent a relative rotation thereof. Since the spring 3 described above is torsionally rigid, and since rod 11 is connected to spring 3, as well as tube 9, a relative rotation of rod 11 with respect to tube 9 is avoided.

This allows to manufacture a compact suspension, which is not prismatic, is easy to be manufactured and highly lightweight.

The suspensions shown in figures 6 and 8 comprise a spring according to a first example, but in a completely similar manner, a spring according to the second example can be replaced for that shown.

Suspension 10, comprising spring 3, 3', rod 11 and tube 9, is configured to elastically shorten the length thereof.

By compressing rod 11 towards tube 9, the lamellae 2, 2' of spring 3, 3' are deformed, while keeping an axial alignment and a torsional rigidity, thus allowing the elastic compression of suspension 10.

Said spring 3, 3' can be covered, in use, by a tube 9 which is appropriately shaped to avoid debris or dirt from entering the lamella pack. In fact, said debris can compromise the operation of the lamellae 2, 2'.

In an alternative example, said tube 9 is connected to a cover 17 acting as a shield for spring 3, 3'.

Suspension 10 can further comprise a damper, preferably a hydraulic damper 26, to dampen the elastic movement of spring 3,3'.

As shown in figure 8, said damper 26 can be arranged inside spring 3, which is arranged, in turn, inside tube 9. The positioning of the damper inside the cylindrical cavity of the lamella pack allows the size of suspension 10 to be optimized.

A front chassis 20 represents another object of the present invention, comprising a suspension 10 according to the previous object of the present invention. Said front chassis 20 is partially shown without the handlebar in figure 7, and shown as a whole in figure 5.

Said suspension 10 is arranged coaxially to the rotation axis of the front chassis 20 with respect to the frame 12 of the motor vehicle. The front chassis 20 comprises a single arm 15, or fork (not shown), a front wheel 13, a handlebar 18 and a suspension 10.

Suspension 10 is connected on one side to the handlebar 18 and on the opposite side to the single arm 15 or fork.

In particular, tube 9, or alternatively rod 11, is connected to the handlebar holder 16 to which handlebar 18 is then connected. Rod 11, or alternatively tube 9, is connected to a single arm 15 or fork (not shown) which is connected, in turn, to the hub of wheel 13.

The rod 11 and/or the tube 9 can be rotatably connected to frame 12 in order to allow the steering movement.

In figure 8, tube 9 is integrally connected to frame 12 and the outer cylindrical portion thereof acts as a steering head for the vehicle.

In figure 6, cover 17 is integrally connected to frame 12. Cover 17 is then pivotally connected by means of bearings 31 to rod 11 and tube 9, respectively.

The front chassis, thus conceived, is torsionally rigid and compact.

Suspension 10 is arranged so that the rotation axis of the steering coincides with the axis Y of spring 3, 3'. The front chassis being indeed the steering of the motor vehicle.

As shown in figure 6, the handlebar holder can be connected to tube 9 in an offset manner.

With reference to figures 5 and 7, a motorcycle 30 is another object of the present invention, comprising a front chassis according to the previous object of the present invention.

In order to meet specific, contingent needs, those skilled in the art can make several modifications and variations to the motor cycles described above, all contained within the scope of the invention as defined by the following claims.

## Claims

1. A suspension (10) for motorcycles comprising:
a tube (9) and a rod (11) configured to slide coaxially one on the top of the other, by means of a cylindrical-type coupling, and a spring (3, 3') interposed therebetween said tube (9) and said rod (11),
**characterized in that** said spring (3, 3') comprises a plurality of annular lamellae (2) stacked on top of one another, wherein adjacent lamellae (2) of said plurality are connected to one another with at least one pair of connection elements (5), so that according to an axial direction (Y), a pair of connection elements (5) is angularly staggered with respect to an adjacent pair of connection elements (5') , wherein said connection elements (5,5') are rigidly connected to said lamellae (2,2'), and wherein
said spring (3) comprises two annular end lamellae (22, 23) axially opposed to each other, said two annular end lamellae (22, 23) are connected to end-stroke elements (24, 25) of the tube (9) and rod (11), respectively, to prevent a relative rotation between said tube (9) and said rod (11), and so that said annular end lamellae (22, 23) can vary the mutual distance while maintaining a coaxial alignment of the annular lamellae (2),
such that said spring (3) allows an elastic bending along said axial direction (Y), avoiding a torsional rotation around said axial direction (Y), and
since said spring (3) result torsionally rigid, a relative rotation of rod (11) with respect to tube (9) is avoided.

2. A suspension (10) for motorcycles according to claim 1, wherein said tube (9, 17) covers said spring (3, 3'), in use.

3. A suspension (10) for motorcycles according to one or more of the preceding claims, further comprising a damper interposed between said tube (9) and said rod (11) and configured to dampen the elastic effect provided by said spring (3,3').

4. A suspension (10) for motorcycles according to claim 3, wherein said damper (26) is of the hydraulic type and is arranged inside said tube (9) so as to at least partially penetrate said spring (3, 3').

5. A suspension (10) for motorcycles according to one or more of the preceding claims, wherein bushings (27) are interposed between said rod (11) and said tube (9) to facilitate the mutual sliding.

6. A front chassis (20) being connectable to a frame (12) of a motorcycle said front chassis comprising at least one suspension (10) according to one or more of the preceding claims, said suspension (10) being arranged coaxially to the rotation axis of the front chassis (20) with respect to the frame (12) of the motorcycle (30), said front chassis further comprising a handlebar (18) connected in a torsionally rigid manner to a fork or a single arm (15) by means of said suspension (10).

7. A motorcycle (30) comprising a front chassis (20) according to claim 6 or a suspension (10) according to one or more of the claims from 1 to 5.

## Patentansprüche

1. Aufhängung bzw. Federung (10) für Motorräder, umfassend:
ein Rohr (9) und eine Stange (11), die konfiguriert sind, mittels einer Zylindertypkopplung koaxial aufeinander zu gleiten, und eine Feder (3, 3'), die zwischen dem Rohr (9) und der Stange (11) angeordnet ist,
**dadurch gekennzeichnet, dass** die Feder (3, 3') eine Mehrzahl von ringförmigen Lamellen (2) umfasst, die aufeinander gestapelt sind, wobei benachbarte bzw. angrenzende Lamellen (2) dieser Mehrzahl mit zumindest einem Paar von Verbindungselementen (5) miteinander verbunden sind, so dass gemäß einer axialen Richtung (Y) ein Paar von Verbindungselementen (5) in Bezug auf ein benachbartes bzw. angrenzendes Paar von Verbindungselementen (5') winkelig versetzt ist, wobei die Verbindungselemente (5, 5') starr mit den Lamellen (2, 2') verbunden sind, und wobei
die Feder (3) zwei ringförmige Endlamellen (22, 23) umfasst, die einander axial gegenüberliegen bzw. entgegengesetzt sind, wobei die beiden ringförmigen Endlamellen (22, 23) mit Endhubelementen (24, 25) des Rohrs (9) bzw. der Stange (11) verbunden sind, um eine relative Drehung zwischen dem Rohr (9) und der Stange (11) zu verhindern, und so dass die ringförmigen Endlamellen (22, 23) den gegenseitigen Abstand variieren können, während eine koaxiale Ausrichtung der ringförmigen Lamellen (2) aufrechterhalten wird,
so dass die Feder (3) eine elastische Biegung entlang der axialen Richtung (Y) ermöglicht, wobei eine Torsionsdrehung um die axiale Richtung (Y) vermieden wird, und
da die Feder (3) torsionssteif ist, eine relative Drehung der Stange (11) in Bezug auf das Rohr (9) vermieden wird.

2. Aufhängung (10) für Motorräder nach Anspruch 1, wobei das Rohr (9, 17) die Feder (3, 3') bei Gebrauch bedeckt.

3. Aufhängung (10) für Motorräder nach einem oder mehreren der vorhergehenden Ansprüche, ferner umfassend einen Dämpfer, der zwischen dem Rohr (9) und der Stange (11) angeordnet und konfiguriert ist, die elastische Wirkung der Feder (3, 3') zu dämpfen.

4. Aufhängung (10) für Motorräder nach Anspruch 3, wobei der Dämpfer (26) vom Hydrauliktyp ist und im Inneren des Rohrs (9) angeordnet ist, um die Feder (3, 3') zumindest teilweise zu durchdringen.

5. Aufhängung (10) für Motorräder nach einem oder mehreren der vorhergehenden Ansprüche, wobei Buchsen (27) zwischen der Stange (11) und dem Rohr (9) angeordnet sind, um das gegenseitige Gleiten zu erleichtern.

6. Frontfahrgestell (20), das mit einem Rahmen (12) eines Motorrads verbindbar ist, wobei das Frontfahrgestell zumindest eine Aufhängung bzw. Federung (10) nach einem oder mehreren der vorhergehenden Ansprüche umfasst, wobei die Aufhängung (10) koaxial zu der Drehachse des Frontfahrgestells (20) in Bezug auf den Rahmen (12) des Motorrads (30) angeordnet ist, wobei das Frontfahrgestell ferner einen Lenker (18) umfasst, der mittels der Aufhängung (10) torsions- bzw. drehstarr mit einer Gabel oder einem einzelnen Arm (15) verbunden ist.

7. Motorrad (30), umfassend ein Frontfahrgestell (20) nach Anspruch 6 oder eine Aufhängung bzw. Federung (10) nach einem oder mehreren der Ansprüche 1 bis 5.

## Revendications

1. Suspension (10) pour motocyclettes comprenant :
un tube (9) et une tige (11) configurés pour glisser coaxialement l'un sur l'autre, au moyen d'un accouplement de type cylindrique, et un ressort (3, 3') interposé entre ledit tube (9) et ladite tige (11),
**caractérisée en ce que** ledit ressort (3, 3') comprend
une pluralité de lamelles annulaires (2) empilées les unes sur les
autres, dans laquelle des lamelles (2) adjacentes de ladite pluralité sont reliées entre elles avec au moins une paire d'éléments de liaison (5), de sorte que selon une direction axiale (Y), une paire d'éléments de liaison (5) soit décalée angulairement par rapport à une paire adjacente d'éléments de liaison (5'), dans laquelle lesdits éléments de liaison (5,5') sont reliés de manière rigide auxdites lamelles (2,2'), et dans laquelle
ledit ressort (3) comprend deux lamelles d'extrémité annulaires (22, 23) opposées axialement l'une à l'autre, lesdites deux lamelles d'extrémité annulaires (22, 23) sont reliées à des éléments de fin de course (24, 25) du tube (9) et de la tige (11), respectivement, pour empêcher une rotation relative entre ledit tube (9) et ladite tige (11), et de sorte que lesdites lamelles d'extrémité annulaires (22, 23) puissent faire varier la distance mutuelle tout en maintenant un alignement coaxial des lamelles annulaires (2),
de sorte que ledit ressort (3) permette une flexion élastique le long de ladite direction axiale (Y), évitant une rotation de torsion autour de ladite direction axiale (Y), et
étant donné que ledit ressort (3) est rigide en torsion, une rotation relative de la tige (11) par rapport au tube (9) est évitée.

2. Suspension (10) pour motocyclettes selon la revendication 1, dans laquelle ledit tube (9, 17) recouvre ledit ressort (3, 3'), lors de l'utilisation.

3. Suspension (10) pour motocyclettes selon une ou plusieurs des revendications précédentes, comprenant en outre un amortisseur interposé entre ledit tube (9) et ladite tige (11) et configuré pour atténuer l'effet élastique fourni par ledit ressort (3,3').

4. Suspension (10) pour motocyclettes selon la revendication 3, dans laquelle ledit amortisseur (26) est du type hydraulique et est agencé à l'intérieur dudit tube (9) de façon à pénétrer au moins partiellement dans ledit ressort (3, 3').

5. Suspension (10) pour motocyclettes selon une ou plusieurs des revendications précédentes, dans laquelle des douilles (27) sont interposées entre ladite tige (11) et ledit tube (9) pour faciliter le glissement mutuel.

6. Châssis avant (20) pouvant être relié à un cadre (12) d'une motocyclette, ledit châssis avant comprenant
au moins une suspension (10) selon une ou plusieurs des revendications précédentes, ladite suspension (10) étant agencée coaxialement à l'axe de rotation du châssis avant (20) par rapport au cadre (12) de la motocyclette (30), ledit châssis avant comprenant en outre un guidon (18) relié de manière rigide en torsion à une fourche ou à un bras simple (15) au moyen de ladite suspension (10).

7. Motocyclette (30) comprenant un châssis avant (20) selon la revendication 6 ou une suspension (10) selon une ou plusieurs des revendications 1 à 5.
